# EUROPEAN PATENT SPECIFICATION

(11) **EP 3 843 976 B1**
(45) Date of publication and mention of the grant of the patent: **05.10.2022**
(21) Application number: 19782778.5
(22) Date of filing: 30.08.2019
(51) Int. Cl.: B33Y 10/00

(54) **METHODS AND SYSTEMS FOR LAYERED DEPOSITION MODELLING WITH REINFORCED INTERLAYER CONNECTIONS**
VERFAHREN UND SYSTEME FÜR SCHMELZSCHICHTUNG MIT VERSTÄRKTEN ZWISCHENSCHICHTVERBINDUNGEN
PROCÉDÉS ET SYSTÈMES PERMETTANT UN MODÉLISATION PAR DÉPÔT EN COUCHES COMPRENANT DES LIAISONS INTER-COUCHES RENFORCÉES

(30) Priority: 31.08.2018 NL 2021537
(43) Date of publication of application: 07.07.2021
(73) Proprietor: Ultimaker B.V., 3511 ED Utrecht (NL)
(72) Inventor: VAN KESSEL, Jakobus Josephus, 4196 AJ Tricht (NL); HEIJMANS, Tom, 5641 NG Eindhoven (NL)
(74) Representative: Nederlandsch Octrooibureau
(86) International application number: PCT/NL2019/050556
(87) International publication number: WO 2020/046125

(56) References cited:
- WO-A1-2017/152142
- US-A1- 2015 367 576
- US-A1- 2016 009 029

## Description

### Field of the invention

The present invention relates to a layer deposition method for additive manufacturing, in particular to methods for providing reinforced interlayer connections between deposited layers. In a further aspect the present invention relates to an additive manufacturing system configured to deposit layers exhibiting reinforced interlayer connections. It also relates to a method of controlling a system for three-dimensional additive layer deposition, and to a computer program product.

### Background art

US patent application US 2015/0266235 A1 discloses methods for improved 3D printing, such as methods for fused deposition modelling (FDM) wherein toolpath techniques are deployed to create non-planar layers through non-planar relative motion of an extruder or another material deposition system. In an embodiment, non-planar layers are formed to interconnect underlying layers that have been deposited. Such non-planar layers are said to reduce the interlayer weakness sometimes found in FDM products that have been formed through planar layer deposition.

One of the disadvantages of such methods for non-planar layer deposition is that different extruder nozzles may be required for a single product. For example, sections of inclined layers to be deposited may require a nozzle change to a sharp/pointy extruder nozzle design to avoid that the extruded nozzle scrapes an underlying inclined layer. Another disadvantage of depositing non-planar layers is that non-planar model parameters and software processing become considerably more complex compared to planar software processing. US2015/367576 A1 concerns methods of layered deposition modelling.

### Summary of the invention

The present invention aims to provide improved layer deposition methods for three dimensional additive manufacturing, wherein stacked layers exhibit improved interlayer connection for increased durability and strength of three-dimensional objects. The method of the present invention does not require a nozzle change when depositing layers as a result of which layer consistency and manufacturing speed can be maintained. Furthermore, the method of the present invention does not increase the complexity of model parameters as well as model software processing in any significant way.

According to the present invention, a method for obtaining reinforced interlayer connections during layered deposition modelling is provided, wherein the method comprises the steps of
a) depositing a plurality of layers of extrudable material with an extruder head on a build plate extending in an x and y direction;
b) positioning a layer engagement member at an x-y location above the plurality of layers where interlayer connection between the plurality of layers is to be reinforced;
c) lowering the layer engagement member for engagement with the plurality of layers, wherein a pressing surface of the layer engagements member is lowered at least below an upper surface of a second most upper layer, thereby locally fusing an upper layer and the second most upper layer at the x-y location; and
d) raising the layer engagement member from the plurality of layers.

When performing the method, particularly in light of step c) and d), interlayer connections are reinforced by locally fusing the plurality of layers through a successively executed downward and upward movement of the layer engagement member at the x-y location. Such a locally executed downward and upward movement may be referred to as a "plunge" of the layer engagement member at the x-y location, so that the layer engagement member comes into physical contact with the plurality of layers as a result of which local fusion thereof takes place.

An advantage of the present method is that an efficient mechanism is provided to effectively "spot weld" stacked layers at the x-y location during an additive manufacturing process, wherein the spot weld significantly increases interlayer bonding strength and durability.

In an embodiment it is possible that the layer engagement member remains stationary in an x-y plane when performing method steps c) and d). That is, this embodiment may be seen as stopping movement of the extruder head at the x-y location of interest and subsequently performing the local downward and upward motion ("plunge") that provides the local interlayer connection.

In a further embodiment, the method steps c) and d) may also be performed whilst depositing a most upper layer during method step a). So, when depositing the plurality of layers of extrudable material with an extruder head, the local downward and upward movement of the layer engagement member occurs when the extruder head and layer engagement member are in motion at the x-y location.

In an advantageous embodiment, the layer engagement member may be an extruder nozzle of the extruder head. So, at the x-y location, method steps c) and d) may be performed by lowering and raising an extruder nozzle of the nozzle head. In this embodiment the extruder nozzle is used for depositing the extrudable material as well as the lowering and raising step for engagement with the plurality of layers, such that interlayer fusion occurs through physical contact between the extruder nozzle and the plurality of layers.

In an alternative embodiment, the layer engagement member may be a needle or rod shaped instrument configured to engage the plurality of layers. In this embodiment, the needle shaped instrument is not to be construed as an extruder nozzle but as a separate instrument therefrom. Such a separate needle/rod shaped instrument would be configured to come into physical contact with the plurality of layers and as such would absorb mechanical pressure forces when engaging the plurality of layers instead of an extruder nozzle, which may not be able to absorb the mechanical pressure forces.

According to a further aspect, there is provided a system for three-dimensional additive layer deposition, comprising:
- a build plate extending in an x and y direction;
- an extruder head configured to deposit an extrudable material on the build plate;
- a layer engagement member, and
- a control system configured to control movement of the extruder head and the layer engagement member, wherein the control system is further configured to allow the system to:
   a) deposit a plurality of layers of extrusion material with the extruder head;
   b) position the layer engagement member at an x-y location above the plurality of layers where interlayer connection between the plurality of layers is to be reinforced;
   c) lower the layer engagement member for engagement with the plurality of layers, wherein a pressing surface of the layer engagements member is lowered at least below an upper surface of a second most upper layer, thereby locally fusing an upper layer and the second most upper layer at the x-y location; and to
   d) raise the layer engagement member from the plurality of layers.

According to a further aspect, there is provided a method of controlling a system for three dimensional additive layer deposition comprising a build plate extending in an x and y direction, an extruder head configured to deposit an extrudable material on the build plate, and a layer engagement member, the method comprising:
a) initiate deposition of a plurality of layers of extrusion material with the extruder head;
b) position the layer engagement member at an x-y location above the plurality of layers where interlayer connection between the plurality of layers is to be reinforced;
c) lower the layer engagement member for engagement with the plurality of layers, wherein a pressing surface of the layer engagements member is lowered at least below an upper surface of a second most upper layer, thereby locally fusing an upper layer and the second most upper layer at the x-y location; and
d) raise the layer engagement member from the plurality of layers.

According to yet a further aspect there is provided a computer program product comprising code embodied on computer-readable storage and configured so as when run on one or more processing units to perform the method of controlling as described above.

### Brief description of the drawings

The present invention will now be described by way of reference to a number of illustrative embodiments as shown in the accompanying drawings in which:
Figure 1 shows a plurality of layers of extrudable material and a layer engagement member at an x-y location according to an embodiment of the present invention;
Figure 2 shows a downward and upward movement of a layer engagement member at an x-y location according to an embodiment of the present invention;
Figure 3 shows a reinforced interlayer connection between a plurality of layers according to an embodiment of the present invention;
Figure 4 shows an exemplary embodiment wherein a reinforcing material is inserted to improve interlayer bonding between the plurality of layers;
Figure 5 shows a step of lowering and raising the layer engagement member at a different x-y location from a previous x-y location according to an embodiment of the present invention;
Figure 6 shows a plurality of reinforced interlayer connections at a plurality of different x-y locations according to an embodiment of the present invention;
Figure 7 shows lowering and raising the layer engagement member at a previously used x-y location according to an embodiment of the present invention;
Figure 8 shows a plurality of stacked reinforced interlayer connections at an x-y location according to an embodiment of the present invention;
Figure 9 shows a step of lowering the layer engagement member at least below an upper surface of a third most upper layer according to an embodiment of the present invention;
Figure 10 shows a reinforced interlayer connection extending across a plurality of layers according to an embodiment of the present invention;
Figure 11 shows a step of depositing a plurality of layers with an extruder head with an extruder nozzle toward an x-y location according to an embodiment of the present invention;
Figure 12 shows a step of maintaining a layer engagement member stationary at an x-y location and subsequently lowering and rotating the layer engagement member for engagement with a plurality of layers according to an embodiment of the present invention;
Figure 13 shows a step of continuing depositing a plurality of layers subsequent to lowering and raising a layer engagement member according to an embodiment of the present invention; and
Figure 14 shows a step of lowering and raising a layer engagement member for engagement with a plurality of layers whilst maintaining x-y movement of the layer engagement member according to an embodiment of the present invention.

### Detailed description of the embodiments

A well-known technique for additive manufacturing is fused deposition modelling, often referred to as "FDM", wherein layers of extrudable material are deposited in sequential fashion by an extruder head, which typically comprises an extruder/print nozzle which is configured to receive a thermoplastic filament and to heat the filament until it becomes sufficiently viscous as an extrudable material.

When a new layer of extrudable material is deposited on an underlying layer, the extrudable material eventually cools down and cures as a result of which the newly deposited layer adheres to the underlying layer. In most cases a plurality of deposited layers by means of FDM exhibit sufficient interlayer bonding strength between layers. However, in particular scenarios there is a need to have stronger interlayer bonding between layers such that the overall three-dimensional object becomes stronger and durable.

According to the present invention, a method is provided through which stacked layers of extruded material exhibit reinforced interlayer connections such that durability and strength of three-dimensional objects is improved. The method of the present invention is particularly advantageous to obtain reinforced interlayer connections for planar ("horizontal") layer deposition. However, the method may also be used for non-planar layer deposition, thus wherein inclined layers may be deposited and wherein a deposited layer need not extend solely in a substantially horizontal plane.

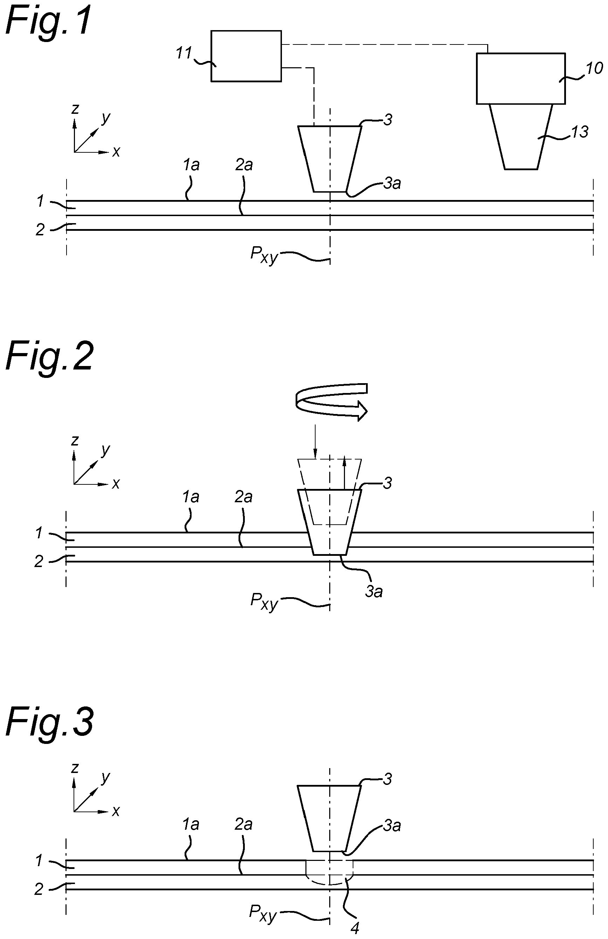

According to the present invention, a method for providing reinforced interlayer connections between a plurality of layers will now be addressed in more details with reference to the Figures. In particular, Figure 1 shows a plurality of layers 1, 2 of extrudable material, wherein an upper layer 1 is positioned on an upper surface 2a of an underlying layer 2 using an extruder head 10 comprising a nozzle 13. The underlying layer 2 may be deposited onto a build plate (not shown) or onto a yet further underlying layer. The upper layer 1 also comprises an upper surface 1a onto which a further layer may be deposited. In view of these layers, the method of the present invention starts with the step of a) depositing a plurality of (stacked) layers 1, 2 of extrudable material with an extruder head 10.

The extruder head 10 is typically configured to move relative to the build plate in a three-dimensional fashion, i.e. in the indicated x-y-z directions. Note that the indicated x-y directions may be considered to be "horizontal", defining a plane parallel to the build plate, and wherein the z-direction is perpendicular to the build plate. In Figure 1, a layer engagement member 3 is depicted which is arranged to move relative to the build plate in the x-y-z directions. The layer engagement member 3 can be moved so as to engage the plurality of layers 1, 2 and in particular to come into physical contact therewith. The layer engagement member 3 is also referred to as the puncture tool 3.

In an embodiment, the layer engagement member 3 is connected to the extruder head 10 such that it moves in unison therewith relative to the build plate in the x-y-z directions. In a further embodiment, the layer engagement member 3 is connected to the extruder head 10 such that it moves in unison therewith in the x-y directions, but wherein the layer engagement member 3 is able to move in a z-direction independently from z-direction movements of the extruder head 10. Alternatively, the layer engagement member 3 may be separately arranged from the extruder head 10, so as to be able to move independently from the extruder head 10 in the x, y and z-direction.

Let an x-y location Pxy be designated as a location at which, or very close thereto, a reinforced interlayer connection is to be achieved between the plurality of layers 1, 2. To that end the method continues with the step of b) positioning the layer engagement member 3, at an x-y location Pxy along, i.e. above, the plurality of layers 1, 2 where interlayer connection between the plurality of layers 1, 2 is to be reinforced. In this step the layer engagement member 3 are positioned above the plurality of (stacked) layers 1, 2 at some suitable z-location.

When the layer engagement member 3 is at the desired x-y location Pxy, the method proceeds with the step of c) lowering the layer engagement member 3 for engagement with the plurality of layers 1, 2 as a result of which the plurality of layers 1, 2 become, at least in part, locally fused together. Here, locally fusing the plurality of layers 1, 2 may be envisaged as a "spot weld". This step is clearly depicted in Figure 2, showing a downward/lowering movement by the downward arrow, wherein a layer engagement member 3 moves toward the plurality of layer 1, 2 at the x-y location Pxy.

During this step, the layer engagement member 3 comes into physical contact with the plurality of layers 1, 2 and mechanically presses said layers 1, 2 at the x-y location Pxy. This allows the plurality of layers 1,2 to at least in part forcibly fuse together at the x-y location. The layer engagement member 3 compromises an abutment or pressing/pressure surface 3a configured to engage/press the plurality of layers 1, 2. It should be noted that in this step it is assumed that the plurality of layers 1, 2 are still mouldable and not yet fully cured.

Once the layer engagement member 3 reached a particular lowest position, the method proceeds with the step of d) raising or lifting the layer engagement member 3 away from the plurality of layers 1, 2. In an embodiment the layer engagement member 3 may be raised or lifted back up to a z-position from which it moved downward in step c).

According to the present invention, lowering and raising the layer engagement member 3 yields a local "spot weld" of the plurality of layers 1, 2 at the x-y location Pxy and as such provides a reinforced interlayer connection that greatly increases interlayer bonding strength between the plurality of layers 1, 2.

In an advantageous embodiment, the layer engagement member 3 is an extruder nozzle, i.e. an extruder nozzle 13 of the extruder head 10, see also Figure 1. So, in this embodiment the extruder head comprises an extruder nozzle configured to deposit the plurality of layers 1,2 and to perform the c) lowering and d) raising movement to forcibly fuse/press the plurality of layers 1, 2 together. This embodiment is advantageous as it allows a reinforced interlayer connection to be provided in seamless fashion with the extrusion process.

In an alternative embodiment, the layer engagement member 3 may be a needle or rod shaped instrument configured to engage the plurality of layers 1, 2. In this embodiment the engagement member 3 is provided as a rod shaped, pointed instrument, i.e. not being an extruder nozzle, and configured to engage the plurality of layers 1,2 and to be lowered and raised for providing the reinforced interlayer connection. Therefore, the extruder head may comprise an extruder nozzle configured to deposit the plurality of layers 1, 2 and wherein the extruder head may further comprise a separate needle or rod-shaped instrument for performing the method step c) and d). Utilizing a separate rod shaped instrument may be advantageous when an extruder nozzle would not be able to reliably withstand mechanical pressure forces when engaging the plurality of layers 1, 2. In those scenarios a separate layer engagement member 3 in the form of a needle or rod shaped instrument may be provided to the extruder head for reliable providing the reinforced interlayer connection.

When the layer engagement member 3 is provided as either an extruder nozzle or a separate needle/rod shaped instrument, then in advantageous embodiments the extruder nozzle or rod-shaped instrument comprises an abutment or pressing/pressure surface 3a configured to engage/press the plurality of layers 1, 2. This will ensure that during the step of c) lowering the extruder nozzle or rod-shaped instrument that enough pressure can be applied to the plurality of layers 1, 2 to fuse at least in part the plurality of layer 1, 2 together at the x-y location.

As shown in Figure 2, in an embodiment method step c) comprises lowering the layer engagement member 3 at least below an upper surface 2a of a second most upper layer 2 of the plurality of layers 1, 2. In this embodiment the layer engagement member 3 is lowered so that a pressing surface 3a comes below the upper surface of the second most upper layer 2, thereby ensuring that the plurality of layers 1, 2 become at least in part fused together.

As further indicated in Figure 2, in an advantageous embodiment method step c) may further comprise rotating the layer engagement member 3, e.g. an extruder nozzle or needle/rod shaped instrument, around a longitudinal z-axis thereof prior to raising the layer engagement member 3. So, when lowering the layer engagement member 3 as it engages the plurality of layers
1,2, rotating the layer engagement member 3 around its longitudinal z-axis may further facilitate fusing of the plurality of layers 1,2 at the x-y location. Note that in an embodiment lowering and rotating the layer engagement member 3 may occur simultaneously. In an alternative embodiment, rotating the layer engagement member 3 may commence once a lowest position has been reached.

Of course, in an embodiment method steps c) and/or d) may each comprise rotating the layer engagement member 3, e.g. an extruder nozzle or needle/rod shaped instrument, around a longitudinal z-axis thereof.

In any case, rotating the layer engagement member 3 as part of method step c) and/or d) may improve local fusion of the plurality of layers 1, 2 which in turn improves the reinforced interlayer connection.

Figure 3 shows an example of a reinforced interlayer connection 4 between a plurality of layers 1, 2. In this embodiment the method step of d) raising the layer engagement member 3 has been completed and the plurality of layers 1, 2 are at least in part fused at the x-y location Pxy. The reinforced interlayer connection 4 may be seen as a "spot weld", thus wherein deposited material of the plurality of layers 1, 2 has been fused together.

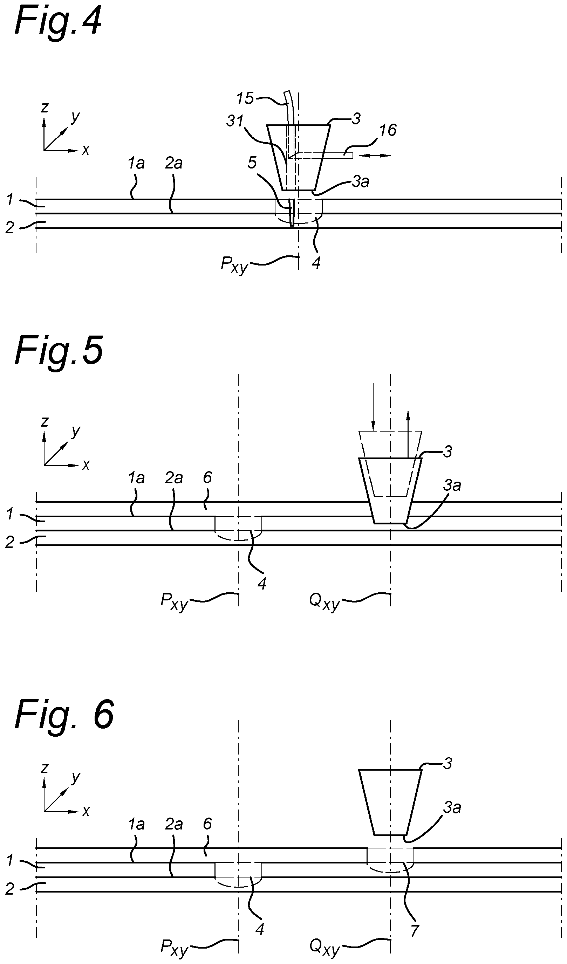

To even further increase interlayer bonding between the plurality of layers 1, 2, Figure 4 shows an exemplary embodiment wherein a reinforcing material 5 is inserted to improve interlayer bonding between the plurality of layers 1, 2.

In the advantageous embodiment shown, methods step c) may further comprise inserting a reinforcing material 5 through at least two of the plurality of layers 1, 2. So in addition to locally fusing the plurality of layers 1, 2, this embodiment introduces the insertion of a reinforcing material 5 into the plurality of layer 1, 2 whilst lowering the layer engagement member 3 and/or when the layer engagement member 3 reached its lowest position. That is, the reinforcing material 5 may be inserted prior to raising the step of c) raising the layer engagement member 3. The reinforcing material 5 provides additional reinforcement of the interlayer connection between the plurality of layer 1, 2.

In an embodiment, insertion of the reinforcing material 5 may be performed by the layer engagement member 3, e.g. an extruder nozzle or rod-shaped instrument as mentioned earlier, or by an insertion unit (not shown) provided to the extruder head separate from the layer engagement member 3. The layer engagement member 3 may comprise a channel 31 through which a reinforcement material 15 is fed. In the example of Figure 4, the layer engagement member 3 comprises a cutter 16 arranged to cut off a strand of the reinforcement material 15. The cutting is preferably performed when the layer engagement member 3 is at its lowest position. By cutting of a part of the reinforcement material, and then raising the layer engagement member 3, a cut off part of the reinforcement material will stay in the plurality of layers 1, 2, see portion 5 in Figure 4.

Depending on particular requirements, in a further embodiment it is conceivable that the method step of d) raising the layer engagement member 3 from the plurality of layers 1, 2 comprises inserting a reinforcing material 5 into the plurality of layers 1, 2. Therefore, inserting a reinforcing material 5 into the plurality of layers 1, 2 may conceivably be performed during methods step c) and/or d), and either performed by the layer engagement member 3 or a special insertion unit separate therefrom.

In an embodiment, the reinforcing material 5 may comprise a fiber based reinforcing material. Such a fiber based reinforcing material may be advantageous as it may be dispersed through the reinforced interlayer connection 4 for further strengthening thereof. The fiber may comprise carbon, aramid, glass or any other material for strengthening the interlayer connection of the plurality of layers 1, 2.

In another embodiment, the reinforcing material 5 may comprise an elongated/rod-like reinforcing member configured to extend through the plurality of layers 1, 2. In this embodiment, the elongated/rod-like reinforcing member may be seen as a mechanical fastener, such as a nail, staple and the like, which is driven into the plurality of layers 1, 2. Insertion of the reinforcing material 5 such as fibres and/or elongated reinforcing members into the plurality of layers 1, 2, may be performed in unison with the step of c) lowering the layer engagement member 3, or it may be performed through a movement simultaneous with but independent from the lowering movement of the layer engagement member 3. Conceivably, insertion of the reinforcing material 5 such as fibres and/or elongated reinforcing members into the plurality of layers 1, 2, may be performed whilst raising the layer engagement member 3 during method step d). Therefore, depending on requirements and ease of implementation, insertion of the reinforcing material 5 may be timed at any moment deemed appropriate, thereby offering great flexibility to further increase interlayer bonding strength as part of an additive manufacturing process. It is also conceivable to insert an elongated/rod-like reinforcing material 5 into the layers without using the layer engagement member 3. For example, a specially designed tool may be used, such as a piston, to insert the elongated /rod-like reinforcement 5 into the layers. Preferably such an insertion is done when the most upper layers are sufficiently mouldable and not yet fully cured. However, it is noted that even in fully cured layers an elongated reinforcement member can be inserted. For example, the elongated/rod-like reinforcement 5 can be heated before it is brought into contact with the layers 1, 2. Such a heated part will locally melt the layers and will cause an interconnection between at least the two upper layers 1, 2.

Up to now method step of b) and c) refer to a single x-y location Pxy at which a reinforced interlayer connection 4 is to be provided. To further improve interlayer connection between the plurality layers 1, 2, a plurality of reinforced interlayer connections 4 may be provided. For that purpose there is provided an embodiment wherein the method comprises a step of repeating method steps b), c) and d) at a plurality of different x-y locations spaced apart along the plurality of layers 1, 2. In this way the plurality of layers 1, 2 exhibits distributed reinforced interlayer connections such that the plurality of layers 1, 2 exhibits increased bonding in distributed fashion, which in turn allows a three-dimensional model to be stronger and durable overall.

As an example on how different x-y locations can be chosen for providing reinforced interlayer connections, Figure 5 shows the steps of c) lowering and d) raising the layer engagement member 3 at a further x-y location Qxy different from a previous x-y location Pxy. In the embodiment shown, the method of the present invention has been performed at the x-y location Pxy and provided the reinforced interlayer connecting 4 at the x-y location Pxy. By choosing a different x-y location Qxy, method step b) then comprises the step of positioning the extruder head, e.g. layer engagement member 3, at the different/further x-y location Qxy along/above the plurality of layers 1, 2 and to subsequently perform the steps of c) lowering and d) raising the layer engagement member 3 (see downward/upward arrows).

Figure 6 shows an example of distributed reinforced interlayer connections 4, 7 that are provided at different x-y locations along a plurality of layers.

In Figure 5 and 6 it is also shown that method steps b), c) and d) need not be performed for the same plurality layers 1, 2. That is, there may be an embodiment wherein the method comprises the step of e) depositing one or more further layers 6 of extrusion material with the extruder head on the plurality of layers 1, 2 previously deposited, and consecutively performing the methods steps b), c) and d) at a further plurality of different x-y locations. This embodiment may be interpreted as consecutively performing the steps of
b) positioning the extruder head at a different x-y location Qxy along/above the one or more further layers 6 where interlayer connection between the one or more further layers 6 and the plurality of layers 1, 2 is to be reinforced;
c) lowering the layer engagement member 3 for engagement with the one or more further layers 6, thereby locally fusing at least in part the one or more further layers 6 and the plurality of layers 1, 2 at the different x-y location Qxy; and
d) raising the layer engagement member 3.

This embodiment allows for a layered approach for providing reinforced interlayer connections 4, 7 in staggered fashion by utilizing different x-y locations. For example, given a plurality of layers 1, 2 provided with a plurality of spaced apart reinforced interlayer connections 4 at a plurality of different x-y locations Pxy, then this embodiment allows one or more further layers 6 to be deposited and provided with a further plurality of reinforced interlayer connections 7 spaced apart at a further plurality of different x-y locations Qxy. In this way a staggered arrangement of reinforced interlayer connections 4, 7 is provided for strength distribution throughout a three-dimensional model.

As depicted, note that in the exemplary embodiment of Figure 6 it is shown that the further reinforced interlayer connection 7 may extend across the one or more further layers 6 and at least in part the plurality of layers 1, 2. As will be further explained later, layer depth of reinforced interlayer connections 4, 7 can be controlled by controlling lowering depth of the layer engagement member 3 when performing method step c).

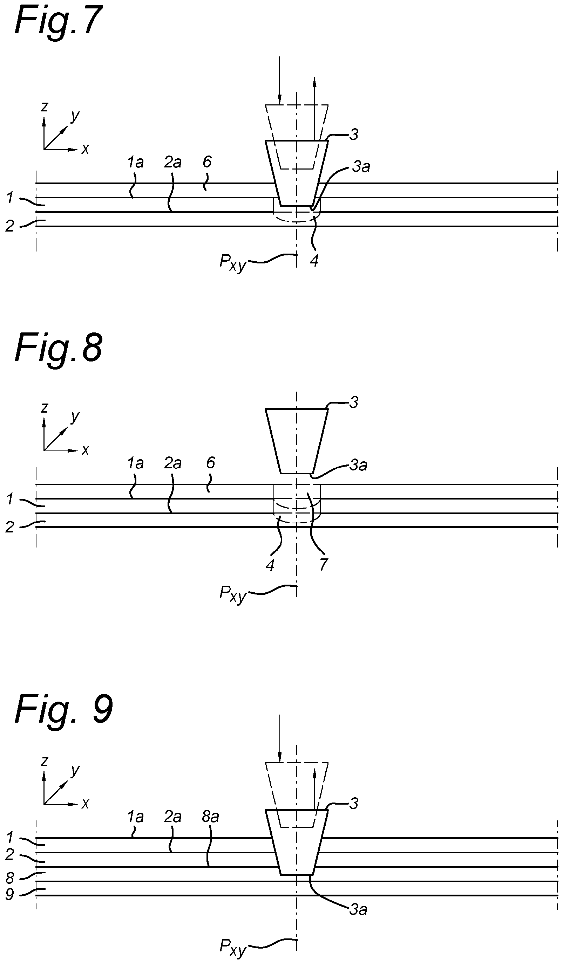

Instead of a staggered arrangement of reinforced interlayer connections 4, 7 as shown in Figure 6, it is also possible to deposit one or more further layers 6 on the plurality of layers 1, 2 and to revisit previously used x-y locations for providing further reinforced interlayer connections 7. For example, Figure 7 shows the step of lowering and raising the layer engagement member 3 at an x-y location Pxy identical to a previous x-y location used for providing the reinforced interlayer connection 4.

Then Figure 8 shows a plurality of reinforced interlayer connections 4, 7 stacked at the same x-y location Pxy, i.e. thus wherein an in-line, stacked arrangement of a plurality of reinforced interlayer connections 4, 7 is provided. Such a stacked arrangement of reinforced interlayer connections 4, 7 may further improve fusion of the plurality of layer 1, 2 at the x-y location Pxy.

In view of such revisited x-y locations, the method of the present invention may further comprise the step of e) depositing one or more further layers 6 of extrusion material with the extruder head on the plurality of layers 1, 2 previously deposited, and consecutively performing the methods steps b), c) and d) at a plurality of different x-y locations previously used.

Again, the further reinforced interlayer connections 7 may extend across the one or more further layers 6 and at least in part the plurality of layers 1, 2, so that reinforced interlayer connections 4, 7 may overlap in z-direction as depicted in Figure 8. An inline, stacked arrangement of reinforced interlayer connections 4, 7 may be advantageous when higher strength requirements are needed for a particular x-y location. For example, by overlapping reinforced interlayer connections, a higher level of fusion/welding between layers may be achieved, which in turn may improve interlayer bonding strength at the particular location.

As mentioned earlier, depth of a reinforced interlayer connection 4,7 may be controlled by controlling lowering depth of the layer engagement member 3 when performing method step c).

For example, Figure 9 shows a step of lowering the layer engagement member 3 at least below an upper surface 2a of a second most upper layer 2 of the plurality of layers 1, 2. In the depicted embodiment, the layer engagement member 3, i.e. the abutment or pressing/pressure surface 3a thereof, is lowered below an upper surface 8a of a third most upper layer 8 of the plurality of layers 1, 2, 8, 9. This provides an effective fusion throughout the plurality of layers 1, 2, 8, 9 in a single lowering step.

In an embodiment the abutment or pressing/pressure surface 3a of the layer engagement member 3 is configured to withstand pressure forces for fusing the plurality of layers 1, 2, 8, 9 together. As noted earlier, it is assumed that the plurality of layers 1, 2, 8, 9 are sufficiently mouldable and not yet fully cured when the lowering step is performed.

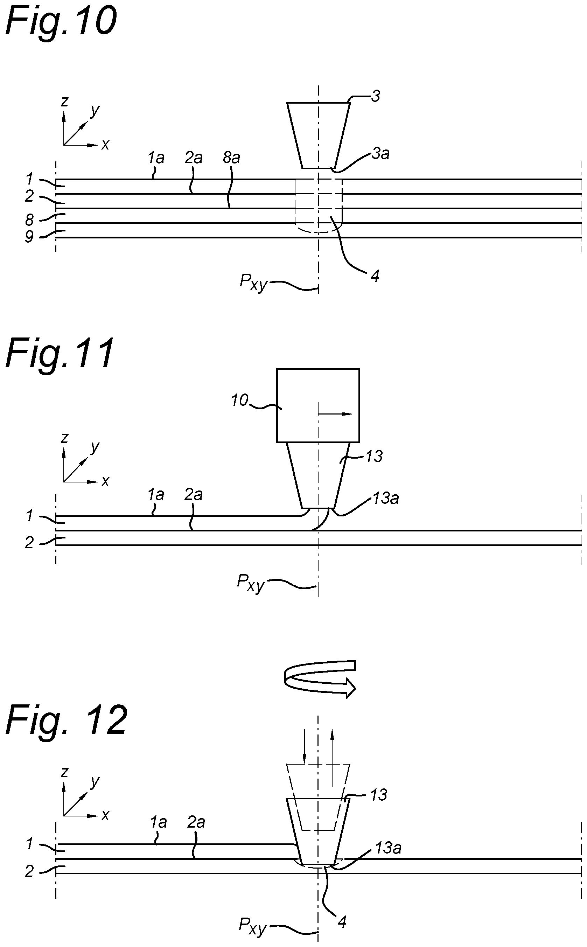

Figure 10 shows an exemplary reinforced interlayer connection 4 extending over the plurality of layers 1, 2, 8, 9. In this depicted embodiment the layer engagement member 3 has been raised, leaving behind a reinforced interlayer connection 4 spanning more than two or three layers 1, 2, 8, thereby providing increased interlayer bonding between a plurality of layers in a single lowering step of the layer engagement member 3, which may be provided as an extruder nozzle or a separate rod shaped instrument as mentioned above.

Figure 11 shows a step of depositing an upper layer 1 of extrudable material on the plurality of layers with an extruder head 10 with an extruder nozzle 13 until the extruder head 10 arrives at an x-y location, according to an embodiment of the present invention. In this embodiment, method step a) of depositing a plurality of layers 1, 2 of extrudable material is ongoing. That is, a most upper layer 1 may be in the process of being deposited and when approaching the x-y location Pxy, the extruder nozzle 13 may be held stationary to perform the steps of c) lowering and d) raising the layer engagement member at the x-y location Pxy, wherein the layer engagement member is embodied by the extruder nozzle 13 dispensing the extrudable material. In Figure 11, a pressing surface of the nozzle is indicated with reference number 13a.

By using the method described with reference to Figure 11, it is possible to provide a reinforced interlayer connection even when the most upper layer 1 is not yet fully deposited, thereby seamlessly integrating the process of providing reinforced interlayer connections with the printing process.

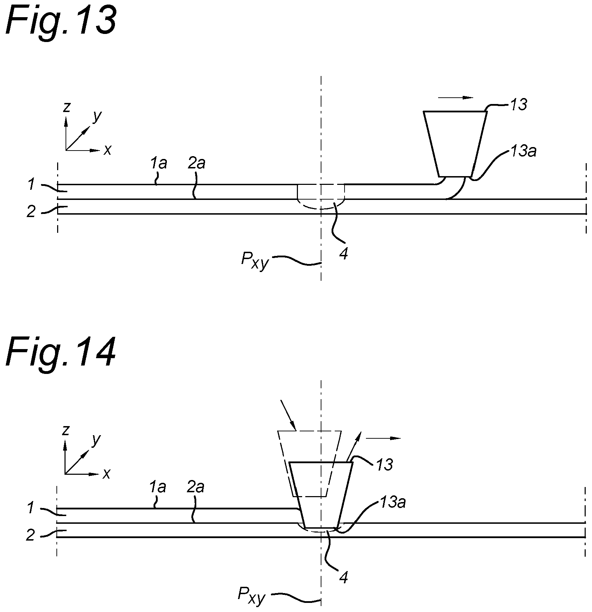

Figure 12 shows a step following the step shown in Figure 11, i.e. wherein the extruder nozzle 13 stops moving and is held stationary, followed by successively lowering and raising the extruder nozzle 13 for engagement with the plurality of layers 1, 2. In this embodiment it is shown that the most upper layer 1 is actively being deposited and exists at the bottom of the extruder nozzle 13 at the x-y location Pxy. By performing the method step of c) lowering and d) raising the extruder nozzle 13, the deposited material for the most upper layer 1 fuses more easily with an underlying layer 2, yielding an improved reinforced interlayer connection 4, see also Figure 13.

As further shown in Figure 12, it remains possible that method step c) and/or d) may comprise rotating the extruder nozzle 13 around a longitudinal z-axis thereof, thereby improving local fusion of the plurality of layers 1, 2 at the x-y location Pxy.

It is noted that an advantage of using an extruder nozzle for creating the interlayer connection 4, is that a punch hole created by the punching (i.e. the lowering and raising of the nozzle), is immediately filled up with extrudable material. This minimizes the risk of leaving unwanted recesses in the upper layer.

Figure 13 shows a step of continuing depositing a plurality of layers 1, 2 subsequent to lowering and raising an extruder nozzle 13 as shown in Figure 12. As depicted, the reinforced interlayer connections 4 extends across the plurality of layers 1, 2 and provides increased interlayer bonding strength between the plurality of layers 1,2 even though the most upper layer 1 is not yet fully completed.

As noted earlier, the extruder nozzle 13 may remain stationary in x-y directions when performing method steps c) and d). That is, the extruder nozzle 13 may be held stationary at the x-y location of interest and then the downward and upward movement of the extruder nozzle may be performed.

Figure 14 on the other hand shows an alternative embodiment wherein the step of c) lowering and d) raising the extruder nozzle 13 are performed whilst maintaining x-y movement of the extruder nozzle 13 as indicated by the slanted arrows.

In this embodiment, method steps c) and d) may be performed whilst depositing a most upper layer 1 during method step a), i.e. thus wherein the extruder head/nozzle is moving. So instead of halting movement of the extruder nozzle 13 for performing the step of c) lowering and d) raising the extruder nozzle 13, the extrusion process may continue uninterrupted whilst the layer engagement member 3 temporally performs the downward and upward movement according to the steps c) and d).

In a further aspect, the present invention relates to an additive manufacturing system configured to deposit layers exhibiting reinforced interlayer connections. Particularly, there is a need for an additive manufacturing system that is able to seamlessly integrate method steps whereby reinforced interlayer connections can be provided as an integral part of an extrusion process. To that end there is provided a system for three-dimensional additive layer deposition, see also Figure 1, comprising:
a build plate extending in a x and y direction;
an extruder head 10 configured to deposit an extrudable material on the build plate; a layer engagement member 3; and
a control system 11 configured to control movement of the extruder head 10 and the layer engagement member 3, and wherein the control system is further configured to allow the system to:
   a) deposit a plurality of layers 1, 2 of extrusion material with the extruder head;
   b) position the layer engagement member 3, at an x-y location along/above the plurality of layers 1, 2 where interlayer connection between the plurality of layers 1, 2 is to be reinforced;
   c) lower the layer engagement member 3 for engagement with the plurality of layers 1, 2, wherein a pressing surface 3a of the layer engagements member 3 is lowered at least below an upper surface 2a of a second most upper layer 2, thereby locally fusing an upper layer 1 and the second most upper layer 2 at the x-y location; and to
   d) raise the layer engagement member 3 from the plurality of layers 1, 2.

In an advantageous embodiment, the layer engagement member 3 may be an extruder nozzle. In this embodiment the extruder head comprises the extruder nozzle which is configured to deposit the plurality of layers 1, 2 and wherein the extruder nozzle may be c) lowered and d) raised to at least in part forcibly fuse/press the plurality of layers 1, 2 together. By allowing the extruder nozzle 13 to perform the downward and upward movement, wherein a pressing surface 13a of the extruder nozzle 13 is lowered at least below an upper surface 2a of a second most upper layer 2, it becomes possible to provide the reinforced interlayer connection 4 efficiently and seamlessly whilst building a three dimensional object.

In an alternative embodiment, the layer engagement member 3 may be a needle or rod shaped instrument configured to engage the plurality of layers 1, 2. Here, the needle or rod shaped instrument is not an extruder nozzle and must be seen as an instrument separate from an extruder nozzle for engaging the plurality of layers 1, 2. As mentioned earlier, such a separate rod shaped instrument may be better suited to withstand mechanical pressure forces when engaging the plurality of layers 1, 2.

According to a further aspect, there is provided a method of controlling a system for three dimensional additive layer deposition comprising a build plate extending in an x and y direction, an extruder head configured to deposit an extrudable material on the build plate, and a layer engagement member, the method comprising:
a) initiate deposition of a plurality of layers of extrusion material with the extruder head;
b) position the layer engagement member at an x-y location above the plurality of layers where interlayer connection between the plurality of layers is to be reinforced;
c) lower the layer engagement member for engagement with the plurality of layers, wherein a pressing surface of the layer engagements member is lowered at least below an upper surface of a second most upper layer, thereby locally fusing an upper layer and the second most upper layer at the x-y location; and
d) raise the layer engagement member from the plurality of layers.

To perform this method, the control system 11 may comprise one or more processing units programmable to perform the method. The control system 11 may also comprise computer-readable storage, such as a ROM or RAM memory (not shown) for storing a computer program product comprising code configured so as when run on one or more processing units to perform the described method of controlling a system for three dimensional additive layer deposition.

The present invention has been described above with reference to a number of exemplary embodiments as shown in the drawings. Modifications and alternative implementations of some parts or elements are possible and are included in the scope of protection as defined in the appended claims.

## Claims

1. A method for providing reinforced interlayer connections during layered deposition modelling, comprising the steps of:
a) depositing a plurality of layers (1, 2) of extrudable material with an extruder head (10) on a build plate extending in an x and y direction;
b) positioning a layer engagement member (3) at an x-y location above the plurality of layers (1, 2) where interlayer connection between the plurality of layers (1, 2) is to be reinforced;
c) lowering the layer engagement member (3) for engagement with the plurality of layers (1, 2) wherein a pressing surface (3a) of the layer engagements member (3) is lowered at least below an upper surface (2a) of a second most upper layer (2), thereby locally fusing an upper layer (1) and the second most upper layer (2) at the x-y location; and
d) raising the layer engagement member (3) from the plurality of layers (1, 2).

2. The method according to claim 1, wherein step c) comprises lowering the layer engagement member (3) at least below an upper surface (8a) of a third most upper layer (8) of the plurality of layers (1, 2).

3. The method according to claim 1 or 2, wherein step c) further comprises inserting a reinforcing material (5) through at least two of the plurality of layers (1, 2).

4. The method according to claim 3, wherein the reinforcing material comprises a fiber based reinforcing material.

5. The method according to any of claims 1-4, wherein method step c) and/or d) further comprises rotating the layer engagement member (3) around a longitudinal z-axis thereof.

6. The method according to any of claims 1-5, further comprises maintaining the layer engagement member (3) stationary in an x-y plane when performing method steps c) and d).

7. The method according to any of claims 1-5, comprises performing method steps c) and d) when depositing the upper layer (1) during method step a).

8. The method according to any of claims 1-7, further comprises the step of repeating method steps b), c) and d) at a plurality of different x-y locations spaced apart along the plurality of layers (1, 2).

9. The method according to claim 8, further comprising the step of e) depositing one or more further layers (6) of extrusion material with the extruder head on the plurality of layers (1, 2) previously deposited, and consecutively performing the methods steps b), c) and d) at the same plurality of different x-y locations.

10. The method according to claim 8, further comprising the step of e) depositing one or more further layers (6) of extrusion material with the extruder head on the plurality of layers (1, 2) previously deposited, and consecutively performing the methods steps b), c) and d) at a further plurality of different x-y locations.

11. The method according to any of claims 1-10, wherein the layer engagement member (3) is an extruder nozzle (13).

12. The method according to any of claims 1-10, wherein the layer engagement member (3) is a needle or rod-shaped instrument.

13. A system for three-dimensional additive layer deposition, comprising:
- a build plate extending in an x and y direction;
- an extruder head (10) configured to deposit an extrudable material on the build plate;
- a layer engagement member (3), and
- a control system (11) configured to control movement of the extruder head and the layer engagement member (3), wherein the control system is further configured to allow the system to:
a) deposit a plurality of layers (1, 2) of extrusion material with the extruder head;
b) position the layer engagement member (3) at an x-y location above the plurality of layers (1, 2) where interlayer connection between the plurality of layers (1, 2) is to be reinforced;
c) lower the layer engagement member (3) for engagement with the plurality of layers (1, 2), wherein a pressing surface (3a) of the layer engagements member (3) is lowered at least below an upper surface (2a) of a second most upper layer (2), thereby locally fusing an upper layer (1) and the second most upper layer (2) at the x-y location; and to
d) raise the layer engagement member (3) from the plurality of layers (1, 2).

14. A method of controlling a system for three-dimensional additive layer deposition comprising a build plate extending in an x and y direction, an extruder head configured to deposit an extrudable material on the build plate, and a layer engagement member (3), the method comprising:
a) initiate deposition of a plurality of layers (1, 2) of extrusion material with the extruder head;
b) position the layer engagement member (3) at an x-y location above the plurality of layers (1, 2) where interlayer connection between the plurality of layers (1, 2) is to be reinforced;
c) lower the layer engagement member (3) for engagement with the plurality of layers (1, 2), wherein a pressing surface (3a) of the layer engagements member (3) is lowered at least below an upper surface (2a) of a second most upper layer (2), thereby locally fusing an upper layer (1) and the second most upper layer (2) at the x-y location; and
d) raise the layer engagement member (3) from the plurality of layers (1, 2).

15. A computer program product comprising code embodied on computer-readable storage and configured so as when run on one or more processing units to perform the method of claim 14.

## Patentansprüche

1. Verfahren zum Bereitstellen von verstärkten Zwischenschichtverbindungen während einer Schichtablagerungsmodellierung, das die folgenden Schritte umfasst:
a) Aufbringen einer Vielzahl von Schichten (1, 2) aus extrudierbarem Material mit einem Extruderkopf (10) auf eine Bauplatte, die sich in einer x- und y-Richtung erstreckt;
b) Positionieren eines Schichteingriffselements (3) an einer x-y-Stelle über der Mehrzahl von Schichten (1, 2), an der die Zwischenschichtverbindung zwischen der Mehrzahl von Schichten (1, 2) zu verstärken ist;
c) Absenken des Schichteingriffselements (3) zum Eingriff mit der Vielzahl von Schichten (1, 2), wobei eine Druckfläche (3a) des Schichteingriffselements (3) zumindest unter eine obere Fläche (2a) einer zweitobersten Schicht (2) abgesenkt wird, wodurch eine obere Schicht (1) und die zweitoberste Schicht (2) an der x-y-Stelle lokal verschmolzen werden; und
d) Anheben des Schichteingriffselements (3) von der Vielzahl von Schichten (1, 2).

2. Verfahren nach Anspruch 1, wobei der Schritt c) ein Absenken des Schichteingriffselements (3) mindestens unter eine obere Fläche (8a) einer drittobersten Schicht (8) der Vielzahl von Schichten (1, 2) umfasst.

3. Verfahren nach Anspruch 1 oder 2, wobei der Schritt c) ferner ein Einführen eines Verstärkungsmaterials (5) durch mindestens zwei der Mehrzahl von Schichten (1, 2) umfasst.

4. Verfahren nach Anspruch 3, wobei das Verstärkungsmaterial ein Verstärkungsmaterial auf Faserbasis umfasst.

5. Verfahren nach einem der Ansprüche 1 bis 4, wobei der Verfahrensschritt c) und/oder d) ferner ein Drehen des Schichteingriffselements (3) um eine z-Längsachse desselben umfasst.

6. Verfahren nach einem der Ansprüche 1 bis 5, bei dem das Schichteingriffselement (3) in einer x-y-Ebene stationär gehalten wird, wenn die Verfahrensschritte c) und d) durchgeführt werden.

7. Verfahren nach einem der Ansprüche 1 bis 5, umfassend eine Durchführung der Verfahrensschritte c) und d) beim Ablagern der oberen Schicht (1) während des Verfahrensschritts a).

8. Verfahren nach einem der Ansprüche 1-7, umfassend ferner einen Schritt eines Wiederholens der Verfahrensschritte b), c) und d) an einer Vielzahl von verschiedenen x-y-Positionen, die entlang der Vielzahl von Schichten (1, 2) voneinander beabstandet sind.

9. Verfahren nach Anspruch 8, ferner umfassend einen Schritt e) zum Ablagern einer oder mehrerer weiterer Schichten (6) aus Extrusionsmaterial mit dem Extruderkopf auf der Vielzahl der zuvor abgelegten Schichten (1, 2) und aufeinanderfolgendes Durchführen der Verfahrensschritte b), c) und d) an derselben Vielzahl unterschiedlicher x-y-Stellen.

10. Verfahren nach Anspruch 8, das ferner einen Schritt e) eines Ablagerns einer oder mehrerer weiterer Schichten (6) aus Extrusionsmaterial mit dem Extruderkopf auf der Vielzahl der zuvor abgelegten Schichten (1, 2) und eines aufeinanderfolgenden Durchführens der Verfahrensschritte b), c) und d) an einer weiteren Vielzahl unterschiedlicher x-y-Positionen umfasst.

11. Verfahren nach einem der Ansprüche 1-10, wobei das Schichteingriffselement (3) eine Extruderdüse (13) ist.

12. Verfahren nach einem der Ansprüche 1-10, wobei das Schichteingriffselement (3) ein nadel- oder stabförmiges Instrument ist.

13. System zur dreidimensionalen additiven Schichtablagerung, umfassend:
- eine Bauplatte, die sich in x- und y-Richtung erstreckt;
- einen Extruderkopf (10), der so konfiguriert ist, dass er ein extrudierbares Material auf die Aufbauplatte aufbringt;
- ein Schichteingriffselement (3), und
- ein Steuersystem (11), das so konfiguriert ist, dass es eine Bewegung des Extruderkopfs und des Schichteingriffselements (3) steuert, wobei das Steuersystem ferner so konfiguriert ist, dass es dem System ermöglicht:
a) eine Vielzahl von Schichten (1, 2) von Extrusionsmaterial mit dem Extruderkopf abzulagern;
b) das Schichteingriffselement (3) an einer x-y-Position über der Mehrzahl von Schichten (1, 2) zu positionieren, wo die Zwischenschichtverbindung zwischen der Mehrzahl von Schichten (1, 2) verstärkt werden soll;
c) ein Absenken des Schichteingriffselements (3) zum Eingriff mit der Vielzahl von Schichten (1, 2), wobei eine Druckfläche (3a) des Schichteingriffselements (3) zumindest unter eine obere Fläche (2a) einer zweitobersten Schicht (2) abgesenkt wird, wodurch eine obere Schicht (1) und die zweitoberste Schicht (2) an der x-y-Stelle lokal verschmolzen werden; und
d) ein Anheben des Schichteingriffselements (3) von der Vielzahl von Schichten (1, 2).

14. Verfahren zum Steuern eines Systems zur dreidimensionalen additiven Schichtablagerung, das eine sich in x- und y-Richtung erstreckende Aufbauplatte, einen Extruderkopf, der zum Ablagern eines extrudierbaren Materials auf die Aufbauplatte konfiguriert ist, und ein Schichteingriffselement (3) umfasst, wobei das Verfahren Folgendes umfasst
a) Einleiten der Ablagerung einer Vielzahl von Schichten (1, 2) aus extrudierbarem Material mit dem Extruderkopf;
b) Positionieren des Schichteingriffselements (3) an einer x-y-Stelle über der Mehrzahl von Schichten (1, 2), wo die Zwischenschichtverbindung zwischen der Mehrzahl von Schichten (1, 2) verstärkt werden soll;
c) Absenken des Schichteingriffselements (3) zum Eingriff mit der Vielzahl von Schichten (1, 2), wobei eine Druckfläche (3a) des Schichteingriffselements (3) zumindest unter eine obere Fläche (2a) einer zweitobersten Schicht (2) abgesenkt wird, wodurch eine obere Schicht (1) und die zweitoberste Schicht (2) an der x-y-Stelle lokal verschmolzen werden; und
d) Anheben des Schichteingriffselements (3) von der Vielzahl von Schichten (1, 2).

15. Computerprogrammprodukt, das einen auf einem computerlesbaren Speicher verkörperten Code umfasst und so konfiguriert ist, dass es, wenn es auf einer oder mehreren Verarbeitungseinheiten ausgeführt wird, das Verfahren nach Anspruch 14 durchführt.

## Revendications

1. - Procédé pour fournir des liaisons intercouches renforcées pendant un modelage de dépôt en couches, comprenant les étapes suivantes :
a) déposer une pluralité de couches (1, 2) de matériau extrudable avec une tête d'extrudeuse (10) sur une plaque de construction s'étendant dans une direction x et y ;
b) positionner un élément d'engagement de couche (3) à un emplacement x-y au-dessus de la pluralité de couches (1, 2) où une liaison intercouche entre la pluralité de couches (1, 2) doit être renforcée ;
c) abaisser l'élément d'engagement de couche (3) pour un engagement avec la pluralité de couches (1, 2), une surface de pression (3a) de l'élément d'engagement de couche (3) étant abaissée au moins au-dessous d'une surface supérieure (2a) d'une deuxième couche la plus haute (2), fusionnant ainsi localement une couche supérieure (1) et la deuxième couche la plus haute (2) à l'emplacement x-y ; et
d) relever l'élément d'engagement de couche (3) à partir de la pluralité de couches (1, 2).

2. - Procédé selon la revendication 1, dans lequel l'étape c) comprend abaisser l'élément d'engagement de couche (3) au moins au-dessous d'une surface supérieure (8a) d'une troisième couche la plus haute (8) de la pluralité de couches (1, 2).

3. - Procédé selon la revendication 1 ou 2, dans lequel l'étape c) comprend en outre introduire un matériau de renforcement (5) à travers au moins deux de la pluralité de couches (1, 2).

4. - Procédé selon la revendication 3, dans lequel le matériau de renforcement comprend un matériau de renforcement à base de fibre.

5. - Procédé selon l'une quelconque des revendications 1 à 4, dans lequel l'étape c) et/ou d) du procédé comprend faire tourner l'élément d'engagement de couche (3) autour d'un axe z longitudinal de celui-ci.

6. - Procédé selon l'une quelconque des revendications 1 à 5, comprenant en outre maintenir l'élément d'engagement de couche (3) immobile dans un plan x-y lors de la réalisation des étapes c) et d) du procédé.

7. - Procédé selon l'une quelconque des revendications 1 à 5, comprenant réaliser les étapes c) et d) du procédé lors du dépôt de la couche supérieure (1) pendant l'étape a) du procédé.

8. - Procédé selon l'une quelconque des revendications 1 à 7, comprenant en outre l'étape de répétition des étapes b), c) et d) du procédé à une pluralité de différents emplacements x-y espacés le long de la pluralité de couches (1, 2).

9. - Procédé selon la revendication 8, comprenant en outre l'étape consistant à e) déposer une ou plusieurs autres couches (6) de matériau d'extrusion avec la tête d'extrudeuse sur la pluralité de couches (1, 2) précédemment déposées, et réaliser consécutivement les étapes b), c) et d) du procédé à la même pluralité d'emplacements x-y différents.

10. - Procédé selon la revendication 8, comprenant en outre l'étape consistant à e) déposer une ou plusieurs autres couches (6) de matériau d'extrusion avec la tête d'extrudeuse sur la pluralité de couches (1, 2) précédemment déposées, et réaliser consécutivement les étapes b), c) et d) du procédé à une autre pluralité d'emplacements x-y différents.

11. - Procédé selon l'une quelconque des revendications 1 à 10, dans lequel l'élément d'engagement de couche (3) est une buse d'extrudeuse (13).

12. - Procédé selon l'une quelconque des revendications 1 à 10, dans lequel l'élément d'engagement de couche (3) est un instrument en forme d'aiguille ou de tige.

13. - Système pour le dépôt additif en trois dimensions, comprenant :
- une plaque de construction s'étendant dans une direction x et y ;
- une tête d'extrudeuse (10) configurée pour déposer un matériau extrudable sur la plaque de construction ;
- un élément d'engagement de couche (3), et
- un système de commande (11) configuré pour commander un mouvement de la tête d'extrudeuse et de l'élément d'engagement de couche (3), le système de commande étant en outre configuré pour permettre au système de :
a) déposer une pluralité de couches (1, 2) de matériau d'extrusion avec la tête d'extrudeuse ;
b) positionner l'élément d'engagement de couche (3) à un emplacement x-y au-dessus de la pluralité de couches (1, 2) où une liaison intercouche entre la pluralité de couches (1, 2) doit être renforcée ;
c) abaisser l'élément d'engagement de couche (3) pour un engagement avec la pluralité de couches (1, 2), une surface de pression (3a) de l'élément d'engagement de couche (3) étant abaissée au moins au-dessous d'une surface supérieure (2a) d'une deuxième couche la plus haute (2), fusionnant ainsi localement une couche supérieure (1) et la deuxième couche la plus haute (2) à l'emplacement x-y ; et
d) relever l'élément d'engagement de couche (3) à partir de la pluralité de couches (1, 2).

14. - Procédé de commande d'un système de dépôt additif en trois dimensions comprenant une plaque de construction s'étendant dans une direction x et y, une tête d'extrudeuse configurée pour déposer un matériau extrudable sur la plaque de construction, et un élément d'engagement de couche (3), le procédé comprenant :
a) initier le dépôt d'une pluralité de couches (1, 2) de matériau d'extrusion avec la tête d'extrudeuse
b) positionner l'élément d'engagement de couche (3) à un emplacement x-y au-dessus de la pluralité de couches (1, 2) où une liaison intercouche entre la pluralité de couches (1, 2) doit être renforcée ;
c) abaisser l'élément d'engagement de couche (3) pour un engagement avec la pluralité de couches (1, 2), une surface de pression (3a) de l'élément d'engagement de couche (3) étant abaissée au moins au-dessous d'une surface supérieure (2a) d'une deuxième couche la plus haute (2), fusionnant ainsi localement une couche supérieure (1) et la deuxième couche la plus haute (2) à l'emplacement x-y ; et
d) relever l'élément d'engagement de couche (3) à partir de la pluralité de couches (1, 2).

15. - Produit programme d'ordinateur comprenant un code incorporé dans un stockage lisible par ordinateur et configuré de façon à mettre en œuvre, lorsqu'il est exécuté sur une ou plusieurs unités de traitement, le procédé selon la revendication 14.
